# EUROPÄISCHE PATENTANMELDUNG

(11) **EP 1 389 581 A1**
(43) Veröffentlichungstag der Anmeldung: **18.02.2004**
(21) Anmeldenummer: 03017319.9
(22) Anmeldetag: 31.07.2003
(51) Int. Cl.: B63G 8/00, E02B 17/00

(54) **Verfahren und Vorrichtung zum Versorgen und Warten von baulichen Einrichtungen auf dem Meer**

(30) Priorität: 14.08.2002 DE 10237908
(71) Anmelder: ABB PATENT GmbH, 68526 Ladenburg (DE)
(72) Erfinder: Krokoszinski, Hans-Joachim, Dr., 69226 Nussloch (DE)
(74) Vertreter: Miller, Toivo

(57) **Zusammenfassung**

Die Erfindung bezeiht sich auf ein Verfahren zum Versorgen und Warten von baulichen Einrichtungen (20, 21, 22) auf dem Meer (100). Wegen schlechter Witterungsbedingungen ist es sehr oft nicht möglich, solche baulichen Einrichtungen (20, 21, 22) mit Material zu versorgen und zu warten. Mit dem erfindungsgemäßen Verfahren werden diese Nachteile dadurch umgangen, dass der Zugang zu solchen baulichen Einrichtungen (20, 21, 22) unter Wasser von einem Unterwasserfahrzeug (9) aus erfolgt. Für die Durchführung des Verfahrens wird eine Vorrichtung (1) verwendet, die einen Verbindungskanal (2) aufweist. Das freie Ende (2A) des Verbindungskanals (2) ist im Wasser angeordnet, und mit einem Ein-/Ausstiegsturm (8) eines Unterwasserfahrzeugs (9) verbindbar. Das zweites Ende (2B) des Verbindungskanals (2) wird so installiert, dass es in einen über dem Wasser gelegenen Bereich einer baulich Einrichtung (20, 21, 22) mündet.

## Beschreibung

Die Erfindung betrifft ein Verfahren sowie eine Vorrichtung zum Versorgen und Warten von baulichen Einrichtungen auf dem Meer gemäß der Patentansprüche 1 und 3.

Das Verfahren und die Vorrichtung können für alle baulichen Einrichtungen genutzt werden, die ablandig, im Bereich des Meeres errichtet und auf dem Meeresgrund verankert sind, wie Windturbinen, Kontrollpattformen von Windparkanlagen und Bohrinseln, bei denen Inspektionen, Kontrollen und Reparaturen durchzuführen sind, sowie die Anlieferung von Material und Geräten für Reparaturen erforderlich ist.

Bei Windturbinen, Kontrollplattformen und Bohrinseln muss der Zugang für das technische Personal und das Anliefern von Material vor allem bei Störungen schnell erfolgen. Das geschieht bis jetzt mit Hilfe von kleinen Schiffen oder Booten, die das Personal und das Material auf Laufstegen beispielsweise im Fußbereich einer Windturbine absetzen. Ein Zugang aus der Luft mit Hilfe von Hubschraubern ist auch möglich. Hierbei wird das Personal mit Seilwinden auf dem Dach der Gondel absetzen, die am oberen Ende einer solchen Windturbine installiert ist. Bei Bohrinseln und Kotrollplattformen erfolgt der Zugang des Personals über Schiffe oder Hubschrauber. Da sich die genannten Einrichtungen im Bereich des Meeres befinden, sind hohe Windgeschwindigkeiten und ein hoher Wellengang selbstverständlich. Damit ist der Zugang zu diesen Einrichtungen mittels Booten oder Hubschraubern sehr oft beeinträchtigt. Selbst mit Hilfe von Spezialschiffen, den sogenannten SWATH (Small Waterplane Area Twin Hull), die aufgrund ihrer Bauweise eine stabilere Lage im Wellengang haben als Monohull-Schiffe, kann der Übergang des Personals bei einer Höhe der Wellen von mehr als 2.5m nicht mehr gefahrlos erfolgen. Das gleiche gilt auch für das Abseilen von Personen auf die Gondeln von Windturbinen, die bei den heute üblichen Leistungen der Windkraftanlagen in einer Höhe von mehr als 60m über dem Wasserspiegel angeordnet sind.

Der Erfindung liegt die Aufgabe zugrunde, ein Verfahren aufzuzeigen, mit dem bauliche Einrichtungen der eingangs genannten Art unabhänig von allen Witterungsbedingungen zu jeder Zeit gewartet und mit Material versogt werden können. Ferner liegt der Erfindung die Aufgabe zugrunde, eine Vorrichtung aufzuzeigen, mit der dieses Verfahren durchgeführt werden kann.

Die Aufgabe wird, das Verfahren betreffend, durch die Merkmale des Patentanspruchs 1 gelöst.

Die Aufgabe wird, die Vorrichtung betreffend, durch die Merkmale des Patentanspruchs 3 gelöst.

Mit dem erfindungsgemäßen Verfahren erfolgt der Zugang für die Versorgung und Wartung von baulichen Einrichtungen, die im Bereich des Meeres errichtet sind, unter Wasser von einem Unterwasserfahrzeug aus. Die Versorgung der baulichen Einrichtungen mit Personal, Material und Geräten sowie deren Wartung kann damit unabhängig von den jeweiligen Witterungsverhältnissen durchgeführt werden. Damit reduzieren sich die Stillstandszeiten beim Auftreten von Störfällen in diesen Einrichtungen auf die absolute Minimalzeit. Diese wird nur noch von der Verfügbarkeit des benötigten Personals und der Ersatzteile vor Ort sowie von der Zeit bestimmt, die das Unterwasserfahrzeug bis zum Erreichen der jeweiligen Einrichtung benötigt. Für die Durchführung des Verfahrens wird ein wasserdicht verschließbarer Verbindungskanal zwischen dem Innenbereich einer solchen baulichen Einrichtung und dem Bereich ausgebildet, der unmittelbar darunter im Wasser liegt. Der Verbindungskanal wird so installiert, dass das hierfür vorgesehene Unterwasserfahrzeug den Zugang des Verbindungskanals leicht erreichten kann, ohne mit den Fundamenten der jeweils angesteuerten Einrichtung zu kollidieren. Das verwendete Unterwasserfahrzeug ist mit seinen Abmessungen an diese Bedingungen angepasst. Mit Hilfe eines Justierkonus wird das Andocken des Unterwasserfahrzeugs an den Verbindungskanal zudem erleichtert.

Weitere erfinderische Merkmale sind in den abhängigen Ansprüchen gekennzeichnet.

Die Erfindung wird nachfolgend an Hand von schematischen Zeichnungen näher erläutert.

Es zeigen:
- Fig. 1: ein Vorrichtung für den Zugang zu baulichen Einrichtungen auf dem Meer von einem Unterwasserfahrzeug aus,
- Fig. 2: drei bauliche Einrichtungen, die mit jeweils einer Vorrichtung gemäß Fig. 1 versehen sind.

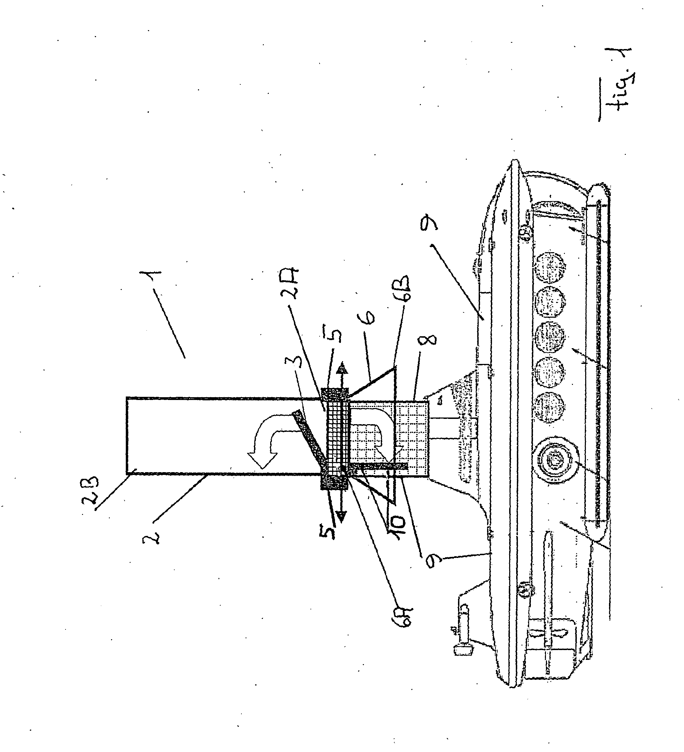

Die in Fig. 1 dargestellte Vorrichtung 1 umfasst einen Verbindungskanal 2, ein Schott 3, einen Koppelring 5 und einen Justierkonus 6. Für die Ausbildung des Verbindungskanals 2 kann beispielsweise ein Rohr verwendet werden, das aus Stahl, oder aus einem Kunststoff gefertigt ist, der eine Verstärkung aus Kohlenstofffasern aufweist. Ein Rohr aus Kunststoff hat ein wesentlich geringeres Gewicht als ein Rohr aus Stahl, und ist damit leichter zu transportieren und zu installieren. Die Abmessungen des Verbindungskanals 2 werden so gewählt, dass in seinem zentralen Teil gegebenenfalls ein Lastenaufzug (hier nicht dargestellt) und/oder an seiner Innenwand eine Leiter (hier nicht dargestellt) installiert werden können, über die Personen, Material und Geräte transportiert werden können. Am ersten Ende 2A des Verbindungs-. kanals 2, der unter Wasser angeordnet wird, ist ein Koppelring 5 installiert, dessen Innendurchmesser etwa dem Innendurchmesser des Verbindungskanals 2 entspricht. Im Koppelrings 5 selbst sind Pumpen (hier nicht dargestellt) installiert. Der durch den Koppelring nach innen begrenzt Bereich ist frei. Zwischen dem ersten Ende 2A des Verbindungskanals 2 und diesem Koppelring 5 ist das Schott 3 installiert. Das Schott 3 wird zum Öffnen in den Innenbereich des Verbindungskanals 2 geschwenkt. An dem nach unten weisenden Ende des Koppelring 5 ist ein Justierkonus 6 angebracht. Der Justierkonus 6 ist mit seinem Ende 6A, das den kleineren Durchmesser aufweist, mit dem Rand des Koppelrings 5 verbunden ist. Das zweite, den größeren Durchmesser aufweisende Ende 6B des Justierkonus 6 ist nach unten gerichtet. Der Justierkonus 6 wird, wie Fig. 1 zeigt, dazu genutzt, den zum Ein- und Aussteigen vorgesehenen Turm 8 eines Unterwasserfahrzeugs 9 während des langsamen Aufsteigens des Unterwasserfahrzeugs 9 zu zentrieren, und in die Rastvorrichtung (hier nicht dargestellt) des Koppelrings 5 zu führen. Innerhalb des Koppelrings 5 sind elektromechanische Vorrichtungen zum Einrasten und Fixieren des oberen Randes des Turms 8 installiert.

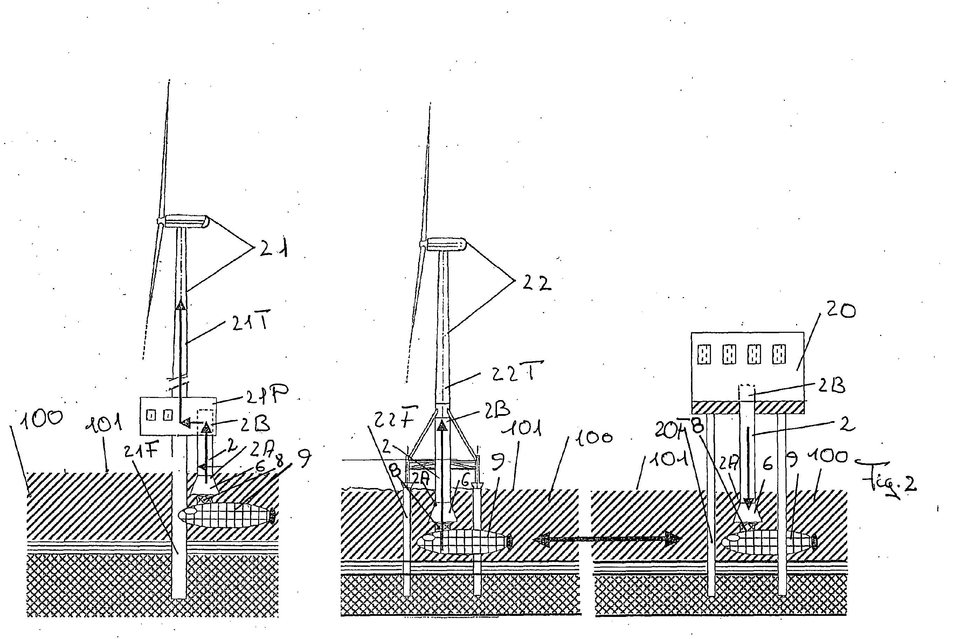

Bei dem Unterwasserfahrzeug 9 handelt es sich um ein für Flachwasser ausgebildetes U-Boot. Es ist mindestens 1,50m breit, und für die Aufnahme von wenigstens vier Personen sowie Material und/oder Geräten ausgelegt. Der ausfahrbare Turm 8 des Unterwasserfahrzeugs 9, der zum Aus- und Einsteigen vorgesehen ist, kann mit einem Schott 10 verschlossen werden. Das Unterwasserfahrzeug 9 ist zudem so gebaut, dass es in der Lage ist, unter den Justierkonus 6 des Verbindungskanals 2 zu tauchen. Der Justierkonus ist zwischen den in Fig. 2 dargestellten Fundamenten 20F, 21 F und 22F der baulichen Einrichtungen 20, 21, 22 in hinreichend großem Abstand davon angeordnet.

Fig. 2 zeigt eine Plattform 20 sowie zwei Windturbinen 21 und 22. Bei der baulichen Einrichtung 20 kann es sich um die Plattform einer Bohrinsel oder die Kontrollplattform einer Windparkanlage (hier nicht dargestellt) handeln. Alle drei Einrichtungen 20, 21, 22 sind im Abstand von einigen Kilometern ablandig auf dem Meer 100 installiert. Die Windturbine 21 weist ein Monopile-Fundament 21 F auf, und ist mit einer Plattform 21 P versehen. Diese ist in hinreichend großem Abstand über der Wasseroberfläche 101 an dem Turm 21T der Windturbine 21 befestigt, und über einen Zugang (hier nicht dargestellt) mit dessen Innenbereich verbunden. Der Abstand zwischen der Plattform 21P und der Wasseroberfläche 101 wird vorzugsweise so gewählt, dass er größer ist als eine maximale jemals zu erwartende Wellenhöhe. Wie Fig. 2 desweiteren zeigt, ist jeweils ein Verbindungskanal 2 mit der Plattform 20 bzw. der Plattform 21P so verbunden, dass das zweite Ende 2B des jeweiligen Verbindungskanals 2 durch die Unterseite der jeweiligen Plattform 20, 21 P in deren Innenbereich geführt ist. Die Windturbine 22, deren Turm über ein Pile Jacket Fundament gehalten wird, verfügt über keine Plattform. Hierbei ist das zweite Ende 2B des Verbindungskanals 2 mit der Unterseite des Turms 22T so verbunden, dass ein kontinuierlicher Übergang von dem Verbindungskanal 2 in den Turm 22T gegeben ist. Die Länge eines jeden Verbindungskanals 2 ist so bemessen, dass sein erstes Ende 2A mit dem daran befestigen Justierkonus 6 so unter der Wasseroberfläche 101 positioniert ist, dass das Unterwasserfahrzeug 9 ohne Kontakt zum Meeresgrund dahin gelangen kann.

Das Annähern des Unterwasserfahrzeugs 9 an den Justierkonus 6, erfolgt vorzugsweise gegen die Richtung der Unterwasserströmung. Es kann ebenso wie das Einführen des Turms 8 in den Justierkonus 6 von einem Computer (hier nicht dargestellt) gesteuert werden, der in dem Unterwasserfahrzeug 9 installiert ist. Das Unterwasserfahrzeug 9 wird mit seinem Turm 8 unter zu Hilfenahme des Justierkonus 6 an dem in Fig. 1 dargestellten Koppelring 5 angedockt. Dabei werden zwischen dem U-Boot 9 und dem Verbindungskanal 2 elektrische Verbindungen (hier nicht dargestellt) über geeignete Unterwasser-Steckverbinder im Koppelring 5 und der Oberkante des Turmes 8 hergestellt. Damit wird eine Betätigung von elektrischen Geräten und eine Sprechverbindung zwischen der baulichen Einrichtung 20, 21, 22 und dem U-Boot 9 ermöglicht.

Anschließend wird das Wasser abgepumpt, das sich in dem Bereich zwischen den beiden Schotts 3 und 10 befindet. Dafür sind die in dem Koppelring 5 installierten Pumpen vorgesehen. Ist dieser Bereich wasserfrei, werden das Schott 3 im Verbindungskanal 2 und das Schott 10 im Turm 8 geöffnet. Das Auspumpen und das Öffnen der Schotts 3 und 10 beim Anlegen sowie das Schließen der Schotts 3 und 10 und das Entklinken des Turms vom Koppelring 5 beim Ablegen des Unterwasserfahrzeugs 9 werden in vorteilhafter Weise motorisch und automatisiert vom U-Boot 9 aus durchgeführt. Bei einem Stromausfall erfolgt das Öffnen und Schließen der Schotts 3 und 10 sowie das Ver- und Entklinken des Turms 8 durch rein mechanische Einrichtungen (hier nicht dargestellt), die zusätzlich installiert sind. Nach Öffnen der Schotts 3 und 10 ist der Weg frei zu den Plattformen 20 und 21 P und dem Turm 22T, so dass Personen zu- oder aussteigen können. Gleichzeitig können Material und Geräte ein- und/oder ausgeladen werden. Das Unterwasserfahrzeug 9 kann mit Hilfe der Vorrichtung 1 jeder Zeit und unabhängig von allen Wetterverhältnissen Personen unbeschadet zu den baulichen Einrichtungen 20, 21 und 22 bringen und auch abholen. Das gleiche gilt auch für Material und Geräte.

Die Erfindung beschränkt sich nicht nur auf das hier beschriebene Ausführungsbeispiel. Vielmehr umfasst sie alle Variationen des Verfahrens und der Vorrichtung, die dem Kern der Erfindung zugeordnet werden können.

## Patentansprüche

1. Verfahren zum Versorgen und Warten von baulichen Einrichtungen (20, 21, 22) auf dem Meer (100), **dadurch gekennzeichnet, dass** der Zugang zu den Einrichtungen (20, 21, 22) unter Wasser erfolgt.

2. Verfahren nach Anspruch 1, **dadurch gekennzeichnet, dass** der Zugang zu den Einrichtungen (20, 21, 22) unter Wasser von einem Unterwasserfahrzeug (9) aus erfolgt.

3. Vorrichtung zum Warten und Versorgen von baulichen Einrichtungen (20, 21, 22) auf dem Meer (100), insbesondere zur Durchführung des Verfahrens nach Anspruch 1, **dadurch gekennzeichnet, dass** wenigstens ein Verbindungskanal (2) vorgesehen ist, dessen erstes freies Ende (2A) im Wasser angeordnet und mit einem Ein-/Ausstiegsturm (8) eines Unterwasserfahrzeugs (9) verbindbar ist, und dessen zweites Ende (2B) mit dem über Wasser gelegenen Bereich einer Einrichtung (20, 21, 22) in Verbindung steht.

4. Vorrichtung, nach Anspruch 3, **dadurch gekennzeichnet, dass** das Unterwasserfahrzeug (9) als ein für Flachwasser ausgebildetes U-Boot mit einer Breite von mindestens 1,50m ausgebildet und für die Aufnahme von wenigstens vier Personen sowie Material und/oder Geräten vorgesehen ist, und dass das U-Boot (9) mit einem Aus-/Einstiegturm (8) versehen, der mit einem Schott (10) verschließbar ist.

5. Vorrichtung nach einem der Ansprüche 3 und 4, **dadurch gekennzeichnet, dass** ein Rohr aus Stahl oder aus mit Kohlenstofffasern verstärktem Kunststoff als Verbindungskanal (2) nutzbar ist, dessen Abmessungen so gewählt sind, dass innerhalb desselben ein Lastenaufzug und/oder eine Leiter ihstallierbar sind, und dass das zweite Ende (2B) des Verbindungskanals (2) als Zugang zu jeder baulichen Einrichtung (20, 21, 22) in den Innenbereich der Einrichtung (20, 21, 22) geführt ist oder dort hinein mündet.

6. Vorrichtung nach einem der Ansprüche 3 bis 5, **dadurch gekennzeichnet, dass** am freien, ersten Ende (2A) des Verbindungskanals (2) ein Koppelring (5) befestigt ist, dessen innerer Durchmesser an den inneren Durchmesser des Verbindungskanals (2) angepasst und dessen Innenbereich über ein Schott (3) vom Innenbereich des Verbindungskanals (2) abtrennbar ist, und dass in dem Koppelring (5) Pumpen installiert sind, und am unteren Rand des Koppelrings (5) ein Justierkonus (6) so installiert ist, dass das aufgeweitete zweite Ende (6B) des Justierkonus (6) nach unten gerichtet ist.

7. Vorrichtung nach einem der Ansprüche 3 bis 6 **dadurch gekennzeichnet, dass** das Schott (3) des Verbindungskanals (2) und das Schott (10) des Turms (8) und die Pumpen des Kopplungsrings (5) motorisch und automatisiert vom Unterwasserfahrzeug (9) aus betätigbar sind, dass noch eine zusätzliche, rein mechanische Betätigungseinrichtung für die beiden Schotts (3 und 10) vorgesehen ist, und dass das Annähern des Unterwasserfahrzeugs (9) und das Einführen des Turms (8) in den Justierkonus (6) von einem Computer des Unterwasserfahrzeugs (9) steuerbar ist.
